# FASCICULE DE BREVET EUROPEEN

(11) **EP 2 813 430 B1**
(45) Date de publication et mention de la délivrance du brevet: **16.09.2015**
(21) Numéro de dépôt: 14001827.6
(22) Date de dépôt: 26.05.2014
(51) Int. Cl.: B64D 11/06

(54) **Siège anti-crash, et aéronef**
Anti-Crash-Sitz, und Flugzeug
Anti-crash seat, and aircraft

(30) Priorité: 10.06.2013 FR 1301316
(43) Date de publication de la demande: 17.12.2014
(73) Titulaire: Airbus Helicopters, 13725 Marignane Cedex (FR)
(72) Inventeur: Fornecker, Florent, F-13300 Salon DE Provence (FR)
(74) Mandataire: GPI & Associés

(56) Documents cités:
- EP-A1- 2 113 457
- EP-A1- 2 813 430
- DE-A1-102008 056 661

## Description

La présente invention concerne un siège anti-crash, et notamment un siège pour un véhicule tel qu'un aéronef. Ce siège intègre des moyens de protection des passagers en cas de chocs violents et/ou d'un brusque changement d'allure de l'appareil, notamment lors d'un crash.

Selon une forme commune de réalisation, le siège associe un châssis et un baquet qui est composé d'une assise rehaussée d'un dossier. Le châssis est ancré à un plancher de l'aéronef par l'intermédiaire de pieds, et comporte des montants en élévation qui sont solidaires des pieds et sont conjointement porteurs du baquet.

On entend par baquet un ensemble sur lequel peut s'assoir un ou plusieurs passagers. Le baquet peut ainsi être une banquette susceptible d'accueillir plusieurs passagers. De plus, on entend par « passager » tout individu embarqué sur l'appareil, à savoir aussi bien un pilote qu'une personne transportée.

De plus, les sièges pour aéronef intègrent des moyens d'absorption d'énergie pour protéger des passagers installés sur ces sièges en cas de crash.

Par exemple, le document US2009/0267390 propose d'agencer au moins un élément absorbeur d'énergie fixé au baquet et au châssis. En cas de crash, le baquet se déplace par rapport au châssis, et déforme ainsi l'élément absorbeur. La déformation de l'élément absorbeur tend à dissiper au moins une partie de l'énergie résultant du crash.

Les moyens d'absorption d'énergie permettent ainsi de notamment réduire les efforts exercés sur les vertèbres lombaires d'un passager lors d'un crash.

Certaines normes civiles et militaires spécifient une plage de population en poids devant survivre à un crash, s'étendant par exemple d'un passager pesant 46,5 kg à un passager pesant 96 kg. La résistance de la structure osseuse d'un passager à un effort de compression intense, résultant par exemple d'une brusque décélération varie de façon significative dans cette plage de population.

Cette plage peut rendre difficile le dimensionnement du moyen d'absorption d'énergie.

Par exemple, si le moyen d'absorption d'énergie est dimensionné pour un passager de faible masse, un passager de masse importante risque d'être blessé car le moyen d'absorption d'énergie peut atteindre une butée ou rompre suite à un crash. Si au contraire le moyen d'absorption d'énergie est dimensionné pour un passager de masse importante, l'absorbeur sera surdimensionné pour un passager de faible masse, et l'énergie résultant de la décélération subie par un passager de faible masse risque de ne pas être dissipée de manière optimale.

Dès lors, des sièges sont munis de systèmes hydrauliques, électroniques ou manuels s'adaptant à la masse du passager.

Le document FR 2923568 présente un dispositif d'absorption d'énergie comportant des moyens de paramétrage automatiques et autonomes intégrant un mécanisme de laminage de fluide hydraulique contrôlant le débit dudit fluide circulant entre une chambre haute pression et une chambre basse pression. La pression régnant dans la chambre haute pression est liée à la compression du fluide hydraulique par un déplacement d'un support de charges. Ce support est par exemple constitutif d'un baquet et les charges représentent un ou plusieurs passagers.

Bien qu'efficace, les solutions hydrauliques peuvent poser des problèmes d'étanchéité, notamment à cause des variations de pression et de température observées sur un aéronef au cours des vols.

Le document US 2008/0156602 présente un système électronique comprenant un contrôleur pilotant un absorbeur d'énergie en fonction d'informations provenant de capteurs.

Le fonctionnement d'un système électronique peut s'avérer erratique durant un crash, par nature destructeur.

Le document US 4,509,621 présente un système réglable manuellement. De même, le document US 4,358,154 prévoit un système d'absorption d'énergie réglable à l'aide d'une molette.

Certains sièges connus sont ainsi équipés de systèmes de réglage manuels afin d'adapter le moyen d'absorption d'énergie à la masse d'un passager par exemple. Ces systèmes nécessitent une intervention humaine pouvant engendrer des oublis ou des erreurs de réglage. Ces systèmes sont en outre souvent lourds, encombrants et coûteux.

Par ailleurs, sur un giravion et notamment sur un hélicoptère, le siège est fortement sollicité en termes de vibrations. Dès lors, l'assisse du siège est généralement recouverte de mousse de garnissage pour limiter les sollicitations vibratoires.

Ainsi, le siège comporte un moyen d'absorption d'énergie de crash et un moyen antivibratoire, à savoir la mousse. On comprend que l'on entend dans l'ensemble de la description par « moyen d'absorption d'énergie » un moyen apte à absorber l'énergie résultant d'une forte accélération ou décélération lors d'un crash pour notamment protéger les vertèbres lombaires d'un individu et par « moyen antivibratoire » un moyen permettant d'éviter la transmission des vibrations du véhicule audit individu pour optimiser son confort.

Bien qu'efficace, si le moyen antivibratoire est peu sollicité par le poids du passager, le moyen d'absorption d'énergie de crash est activé uniquement après consommation de la course résiduelle du moyen d'absorption de vibrations. En d'autres termes, au moment du crash, l'individu se déplace en sollicitant le moyen antivibratoire c'est-à-dire en écrasant la mousse. Cet individu est donc soumis à une augmentation de vitesse avant de solliciter le moyen d'absorption d'énergie de crash. Lors du crash, le mouvement translatif de l'individu est brusquement arrêté. Il en résulte un pic d'efforts sur les vertèbres lombaires au moment de la sollicitation du moyen d'absorption d'énergie de crash. En accord avec les exigences de certification et notamment le règlement connu sous la dénomination « FAR part 29 » applicable aux giravions, le pic d'effort est acceptable tant qu'il demeure en dessous d'un pic maximal.

Les constructeurs prennent donc en considération ce pic maximal, pour dimensionner la mousse par exemple.

Le document US 2011/0204685 propose d'utiliser un système d'inhibition pour inhiber un moyen antivibratoire au moment d'un crash.

Par ailleurs, le document US 5,692,705 décrit une banquette portée par des supports verticaux, au moins un absorbeur d'énergie étant disposé entre la banquette et un support vertical.

De plus, l'aéronef comporte au moins un absorbeur supplémentaire pouvant être accouplé à la banquette à l'aide d'un mécanisme d'accouplement commandé par un harnais.

Le document US 3,482,872 n'est pas présent dans le domaine technique de l'invention. Ce document présente en effet un moyen d'attache d'une ceinture de sécurité permettant un réglage manuel.

La présente invention a alors pour objet de proposer un siège de véhicule apte à assurer une fonction antivibratoire et une fonction anti-crash sans engendrer des pics d'efforts sur des vertèbres lombaires ou à minima en engendrant un pic d'efforts sur des vertèbres lombaires parfaitement maitrisé, ce siège devant de plus avoir un encombrement et une masse optimisés.

Selon l'invention, un siège d'un véhicule comprend un baquet et un châssis fixé à un plancher pour porter le baquet, le baquet étant éventuellement pourvu d'une assise et d'un dossier pour accueillir un passager, le siège comprenant au moins un système d'absorption d'énergie.

Ce siège est notamment remarquable en ce que chaque système d'absorption d'énergie est muni d'une pluralité d'absorbeurs d'énergie agencés en parallèle, chaque absorbeur d'énergie ayant une première extrémité solidarisée au châssis.

Les absorbeurs d'énergie peuvent être d'un type connu. Par exemple, chaque absorbeur peut comprendre un organe allongé s'étendant en élévation d'une première extrémité immobilisée contre le châssis vers une deuxième extrémité mobile en cas de crash.

De plus, le siège comporte un index mobile en translation pour solidariser le baquet à un système d'absorption d'énergie en engageant une deuxième extrémité d'un ou plusieurs absorbeurs d'énergie de ce système.

Dès lors, le siège comporte au moins un système de suspension ayant un organe ressort suspendant le baquet au châssis en fonction de la masse du passager, au moins un système de suspension comportant un moyen d'indexation mécanique coopérant avec un index pour qu'une translation en élévation du système de suspension par rapport au châssis sous l'action de la masse d'au moins un passager assis sur le baquet induise automatiquement une translation transversale de l'index afin d'engager le nombre d'absorbeurs d'énergie correspondant à la masse, ledit siège comportant un système d'inhibition mécanique pour bloquer le système de suspension lors d'un crash.

Ainsi, lorsqu'un passager s'assoit sur le baquet, le baquet se déplace en élévation par rapport au châssis en comprimant ou en étirant l'organe ressort. Un tel organe ressort peut comporter au moins un ressort ou encore un bloc de matière élastique telle qu'un matériau en élastomère par exemple. Le baquet se rapproche alors du sol.

Le système de suspension règle l'amplitude du déplacement en fonction de la masse et donc du poids de la charge portée par le baquet.

Ainsi, au moins un organe du système de suspension effectue un mouvement translatif conjointement avec le baquet selon une direction en élévation.

De plus, le moyen d'indexation du système de suspension déplace l'index par rapport au système d'absorption en translation et selon une direction transversale pour que l'index soit solidarisé au nombre requis d'absorbeurs d'énergie.

A titre d'exemple, l'index est déplacé mécaniquement pour être solidarisé à six absorbeurs d'énergie pour une charge supportée de 60 Kg. Par contre, pour une charge de 80 Kg, l'index est déplacé mécaniquement pour être solidarisé à huit absorbeurs d'énergie.

A vide, l'index peut être solidarisé soit à tous les absorbeurs, soit à un absorbeur voire à aucun absorbeur selon la variante.

Ce siège comporte donc un dispositif mécanique simple permettant d'adapter un système d'absorption d'énergie à la masse supportée par le siège, en mettant en oeuvre un index sélectionnant automatiquement et mécaniquement le nombre d'absorbeurs d'énergie requis.

Préalablement à un crash, le système d'inhibition bloque l'organe ressort. Cette étape peut être réalisée au moment de l'installation d'un passager sur le siège ou encore avant un impact de l'aéronef sur le sol en fonction de la variante.

Au moment du crash, le baquet effectue un mouvement translatif vers le bas. L'organe ressort étant inhibé, le système de suspension se déplace conjointement avec le baquet et l'index. Cet index sollicite alors le système d'absorption d'énergie en tirant sur les absorbeurs sélectionnés préalablement par cet index.

Par ailleurs, ce siège peut comporter une ou plusieurs des caractéristiques qui suivent.

Ainsi, au moins un système d'absorption d'énergie peut comprendre au moins un organe fusible solidaire du châssis pouvant être solidarisé à un index.

Par suite, le système d'absorption d'énergie est sollicité après la rupture du ou des organes fusibles. Les organes fusibles permettent d'éviter une sollicitation intempestive du système d'absorption d'énergie lors d'un atterrissage brutal.

Selon une première variante, l'index peut comporter au moins un cylindre pénétrant dans un orifice des absorbeurs, voire dans un orifice d'un organe fusible le cas échéant. L'index présente donc un doigt pouvant pénétrer dans l'extrémité des absorbeurs d'énergie qui n'est pas fixée au châssis.

Selon une deuxième variante, l'index peut comporter un cylindre évidé qui coulisse autour d'une extrémité des absorbeurs.

Autrement dit, l'index comporte un doigt traversant une extrémité des absorbeurs d'énergie selon la première variante, et un cylindre entourant partiellement cette extrémité selon la deuxième variante.

De plus, le siège peut comporter un moyen de guidage en translation d'au moins un index.

Chaque index peut ainsi être associé à un moyen de guidage.

Par exemple, le siège peut comporter un fourreau dans lequel coulisse une tête de l'index, au moins un ressort étant interposé entre ladite tête et ledit fourreau. Ce fourreau permet de guider l'index. De plus, le ressort tend à placer l'index dans sa position initiale de référence, à savoir la position atteinte en l'absence de charge portée par le siège.

Lors d'un crash, le système d'absorption est sollicité par un index. Pour éviter une déformation de cet index venant dégrader les performances, l'index peut comporter une pluralité de doigts engagés ou engageant le système d'absorption selon la variante.

Par exemple, chaque index comprend un premier doigt coopérant avec les absorbeurs d'un système d'absorption d'énergie et un deuxième doigt coopérant avec un organe fusible du système d'absorption d'énergie le cas échéant.

Selon une version, le moyen d'indexation comporte un carter creux muni d'une lumière présentant une pente inclinée, l'index ayant un ergot coulissant dans la lumière afin qu'une translation en élévation du système de suspension induise le glissement de l'ergot dans la lumière provoquant la translation transversale de l'index.

Le mouvement translatif en élévation d'un moyen de suspension induit le déplacement du carter. Il en résulte un déplacement de la pente inclinée, linéaire ou courbe, par rapport à l'ergot de l'index. Dès lors, l'ergot se déplace transversalement pour s'adapter à la nouvelle position du carter.

Selon une deuxième version, le moyen d'indexation comporte une bielle articulée à un index et à un corps mobile du moyen de suspension. Un déplacement du corps mobile conjointement avec le baquet entraîne le déplacement de l'index.

Ces deux versions proposent donc des systèmes mécaniques simples pour piloter automatiquement la position de l'index, et donc pour sélectionner le nombre d'absorbeurs d'énergie à utiliser en fonction de la masse des passagers assis sur le siège.

Selon une première alternative, le système de suspension peut comporter un vérin muni d'un corps mobile et d'un corps fixe, le corps mobile étant solidarisé au baquet et le corps fixe étant attaché au système d'absorption d'énergie, l'organe ressort étant interposé entre le corps mobile et le corps fixe.

On appelle corps mobile la partie du vérin reliée au baquet, et corps fixe la partie du vérin reliée au système d'absorption d'énergie. En effet, en dehors des cas de crash, le système d'absorption d'énergie ne comporte aucune partie mobile.

Ce vérin peut être un vérin d'un type connu, tel qu'un vérin décrit à l'adresse internet suivante « http://www.stabilus.com/bloc-o-lift-with-rigid-locking-vertical-mounting »

Le système de suspension peut aussi mettre en oeuvre un système de guidage de type vérin et étant apte à être verrouillé sur commande.

L'organe ressort peut être interposé entre un épaulement du corps fixe et le corps mobile par exemple.

Selon un exemple de réalisation, le corps fixe comporte une tige du vérin solidarisée à une tige de renvoi portant un moyen de guidage d'un index.

Dès lors, le système d'inhibition peut être muni d'un enrouleur de harnais et d'un câble de commande du vérin, une came étant interposée entre ledit enrouleur et ledit câble pour qu'une rotation de l'enrouleur induise une translation du câble inhibant le vérin.

Le système d'inhibition est alors mis en oeuvre lorsque le passager met son harnais de sécurité, et donc notamment lors d'un crash.

Par exemple, le câble est fixé à un levier basculant exerçant un effort sur un contacteur du vérin.

Selon une deuxième alternative, le système de suspension comporte un corps cylindrique attaché au système d'absorption d'énergie ainsi qu'une tige solidaire du baquet saillant dudit corps cylindrique et un organe ressort, l'organe ressort étant interposé entre un appui du corps cylindrique et un épaulement de la tige.

Cette tige peut de plus comprendre une portion filetée. Le système de suspension inclut un écrou agencé dans ledit corps cylindrique et en prise sur ladite portion filetée.

Lorsqu'un passager s'assoit sur le siège, la tige se déplace conjointement avec le baquet et sollicite l'organe ressort. En parallèle, l'écrou effectue une rotation autour de la portion filetée pour produire de l'amortissement.

Le système d'inhibition peut alors être muni d'un anneau de blocage disposé dans le corps cylindrique à l'aplomb de l'écrou, le corps cylindrique comportant un moyen d'immobilisation pour immobiliser en rotation l'anneau de blocage autour d'un axe de rotation de l'écrou, l'anneau de blocage comportant une surface interne pourvue de premières cannelures en élévation et l'écrou comportant une surface externe pourvue de deuxièmes cannelures en élévation, un ressort étant interposé entre un épaulement interne du corps cylindrique et l'anneau de blocage pour désolidariser les premières cannelures des deuxièmes cannelures hors conditions de crash et permettre l'engagement des premières cannelures avec les deuxièmes cannelures durant un crash.

Par suite, en dehors des situations de crash, l'anneau de blocage est repoussé par un ressort au dessus de l'écrou. Par contre, lors d'un crash, l'anneau de blocage est sujet à des efforts le déplaçant vers l'écrou. Dès lors, l'anneau de blocage empêche l'écrou d'effectuer un mouvement de rotation et fige ainsi la position de la tige par rapport au corps cylindrique.

Par ailleurs, le châssis peut comporter un premier et un deuxième piètements, un système d'absorption d'énergie par piètement, un index mobile par piètement, un système de suspension par piètement.

Enfin, l'invention vise un aéronef muni d'un siège du type décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, une vue schématique présentant les divers moyens fonctionnels de l'invention,
- la figure 2, un vue d'un système d'absorption d'énergie,
- les figures 3 à 10, des vues explicitant une réalisation de l'invention combinant une première variante d'un index, une première version d'un moyen d'indexation et une première alternative de réalisation d'un système de suspension, et
- les figures 11 à 16, des vues explicitant une réalisation de l'invention combinant une deuxième variante d'un index, une deuxième version d'un moyen d'indexation et une deuxième alternative de réalisation d'un système de suspension.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

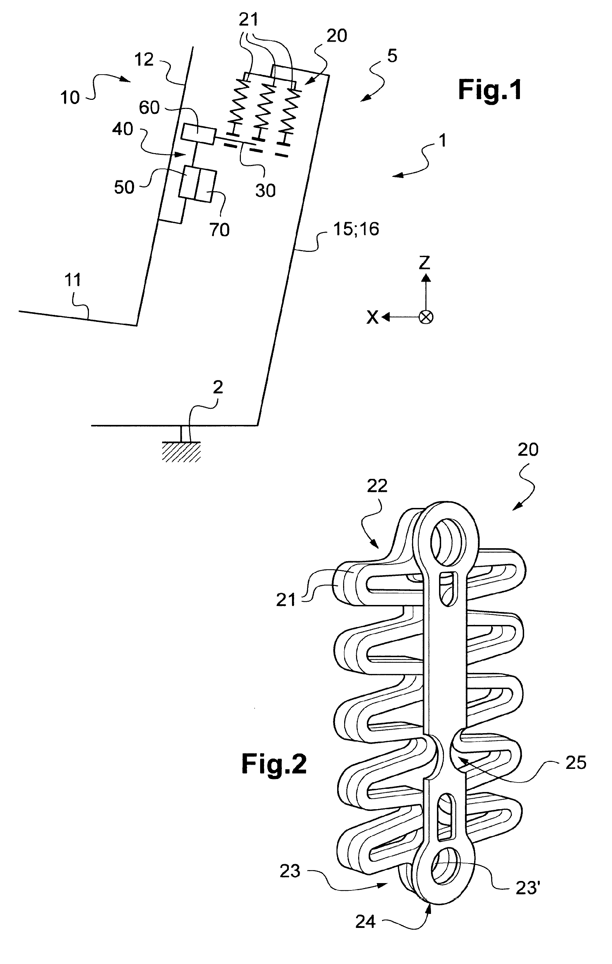

La figure 1 présente un aéronef 1 muni d'un siège 5 qui est fixé à un plancher 2. Les autres organes de l'aéronef ne sont pas représentés pour ne pas alourdir inutilement la figure 1.

Le siège 5 possède un baquet 10 pourvu usuellement d'une assisse 11 et d'un dossier 12. De plus, le siège est muni d'un châssis 15 fixé sur le plancher 2 pour porter le baquet 10. Le châssis 15 peut comprendre un ou plusieurs piètements 16 s'étendant en élévation à partir du plancher 2.

Un système de fixation visant à absorber l'énergie résultant d'un crash suspend alors le baquet 10 au châssis 15.

Ce système de fixation comporte au moins un système d'absorption d'énergie 20. Chaque système d'absorption d'énergie 20 est muni d'une pluralité d'absorbeurs 21 agencés en parallèle.

En référence à la figure 2, chaque absorbeur 21 s'étend en élévation d'une première extrémité 22 vers une deuxième extrémité 23. La première extrémité et/ou la deuxième extrémité peuvent comprendre des orifices pour être fixée à un élément mécanique, ou encore peuvent être pleine(s) pour être introduite(s) dans un élément mécanique. Entre la première extrémité et la deuxième extrémité, un absorbeur peut de plus comprendre une zone plastiquement déformable, la déformation plastique de l'absorbeur permettant d'absorber une partie de l'énergie à l'origine de cette déformation. On se référera à l'état de la technique pour trouver de tels absorbeurs.

De plus, le système d'absorption d'énergie peut comprendre un ou plusieurs organes fusibles 24. Un tel organe fusible peut comprendre une lame munie d'une restriction 25 dimensionnée pour rompre dans des conditions prédéterminées. La lame peut s'étendre entre deux extrémités, éventuellement en vis-à-vis des extrémités des absorbeurs.

On comprend que l'invention peut mettre en oeuvre tout type d'absorbeur d'énergie sollicité en traction notamment.

Dès lors et en référence à la figure 1, chaque absorbeur est fixé par sa première extrémité 22 au châssis 15. Les absorbeurs sont alors suspendus au châssis 15.

De plus, le système de fixation comporte un système de suspension 40 qui est interposé entre le système d'absorption d'énergie 20 et le baquet 10. Ce système de suspension 40 est alors d'une part fixé au baquet 10 et par exemple à un dossier 12, et d'autre part au système d'absorption d'énergie 20. Par exemple le système de suspension est fixé à au moins un organe fusible et/ou à au moins un absorbeur.

Ce système de suspension est muni d'un organe ressort 50 suspendant le baquet 10 au châssis 15 via le système d'absorption d'énergie 20 en fonction de la masse du passager. L'organe ressort 50 ajuste donc la position du baquet 10 par rapport au châssis 15 et au plancher en fonction de la masse du ou des individus assis sur le siège.

De plus, le siège 5 comporte un système d'inhibition 70 pour bloquer le système de suspension 40 lors d'un crash. Lors d'un crash, les mouvements du siège sont ainsi directement transmis au système d'absorption d'énergie.

A cet effet, le système de suspension 40 est équipé d'un moyen d'indexation 60 mécanique en prise avec un index 30. Cet index 30 coulisse transversalement par rapport au système d'absorption d'énergie 20 pour être en prise avec au moins un absorbeur 21, le nombre d'absorbeurs fixés à l'index dépendant de la position du baquet par rapport au châssis.

En effet, le moyen d'indexation a pour fonction d'induire automatiquement une translation transversale de l'index 30 afin d'engager le nombre d'absorbeurs 21 d'énergie correspondant à la masse des individus assis sur le siège en fonction de la translation en élévation effectuée par le système de suspension 40 par rapport au châssis 15 sous l'action de la masse de ces individus.

Lorsque le châssis 15 comporte un premier et un deuxième piètements 16, le siège peut posséder un système d'absorption d'énergie 20 ainsi qu'un index 30 et un système de suspension 40 par piètement 16.

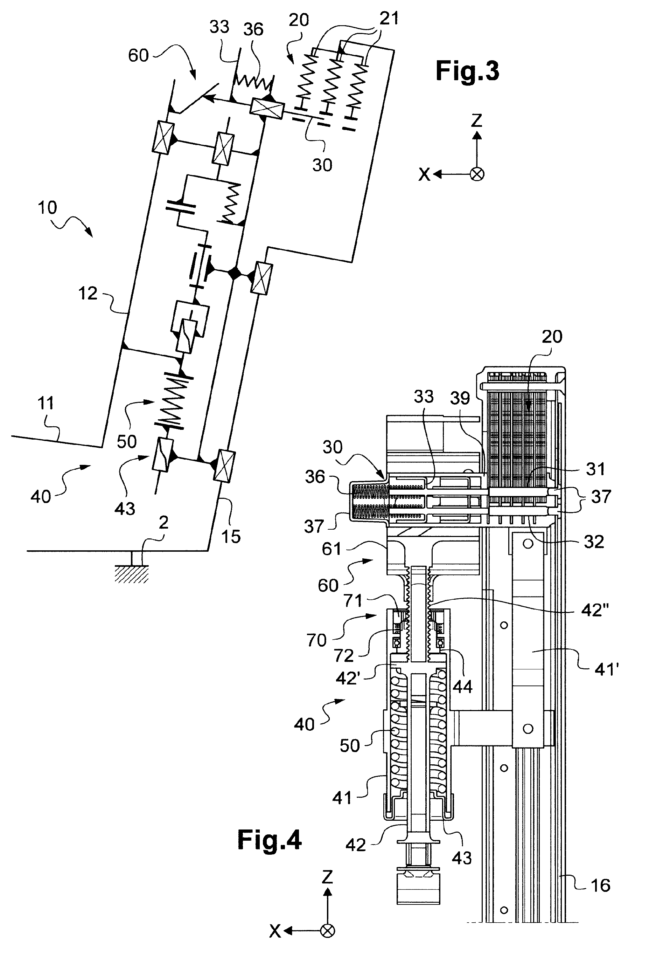

Les figures 3 à 10 présentent une réalisation de l'invention combinant une première variante d'un index, une première version d'un moyen d'indexation et une première alternative de réalisation d'un système de suspension.

En référence aux figures 3 et 4, une première variante d'un index comporte au moins un doigt en forme de cylindre 31, 32 pouvant traverser la deuxième extrémité des absorbeurs et les organes fusibles. Par exemple, l'index comprend au moins un premier doigt 31 destiné à traverser un orifice de la deuxième extrémité des absorbeurs, et au moins un deuxième doigt 32 traversant les organes fusibles.

Un index munit de plusieurs doigts présente l'avantage de comporter plusieurs points de reprise d'effort avec les absorbeurs ce qui permet d'optimiser la répartition des charges exercés sur l'index. Par exemple, un index muni de plusieurs doigts engageant des absorbeurs peut limiter les risques de flexion indue de l'index.

Les fusibles peuvent aussi être utilisés à cet effet, notamment s'il est nécessaire d'adapter aussi la charge maximale admissible avant déclenchement du système d'absorption d'énergie, par exemple dans le cas d'une banquette associée à une plage de masse admissible plus importante que sur un siège individuel. Dans le cas d'un siège individuel, un seul fusible peut être nécessaire.

L'index comporte de plus une tête 33 coulissant dans un fourreau 37. Ce fourreau 37 constitue ainsi un moyen de guidage 39 en translation transversale de l'index.

En outre, au moins un ressort peut être interposé entre le fourreau et l'index, plus précisément entre le fourreau et la tête 33 de l'index selon l'exemple représenté. Ce ressort vise à positionner l'index dans une position prédéterminée en l'absence de masse sur le baquet.

Par exemple, l'index n'est engagé dans aucun absorbeur dans cette position. Par contre, le fourreau peut être muni de moyens d'engagement 37' en prise avec au moins un organe fusible et/ou au moins un absorbeur indépendamment de la masse supporté par le siège afin que le système d'indexage incluant l'index et son guide soit toujours relié au système d'absorption d'énergie 20.

De plus, on note sur la figure 4 que le système d'absorption d'énergie peut être logé dans un piètement 16 du châssis.

Par ailleurs, le système de suspension comporte un ensemble dit « ensemble fixe » qui est relié au système d'absorption d'énergie, et un ensemble dit « ensemble mobile » qui est relié au baquet 10.

L'ensemble mobile peut ainsi comprendre une première version d'un moyen d'indexation 60.

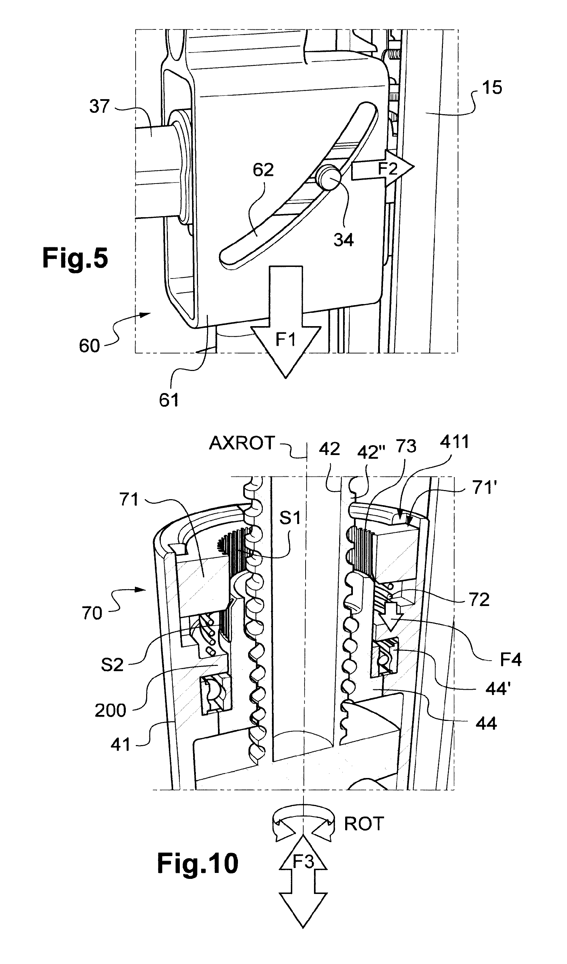

En référence à la figure 5, ce moyen d'indexation 60 comprend un carter creux 61 solidaire du baquet 10. Le carter entoure partiellement un index 30, et notamment, le fourreau 37 servant de guide en translation à l'index 30. Ce fourreau 37 peut comprendre un orifice oblong transversal traversé par un ergot 34 de l'index 30. De même, le carter 61 peut comprendre une lumière 62 présentant une pente inclinée qui est traversée par l'ergot 34.

Dès lors, une translation en élévation selon la flèche F1 du carter 61 induit une translation transversale de l'index selon la flèche F2, le carter exerçant un effort sur l'ergot 64 pour le déplacer au sein de la lumière 62.

En référence à la figure 4, l'ensemble mobile du système de suspension 40 est aussi muni d'une tige 42 solidaire du baquet. La tige 42 est reliée au moyen d'indexation 60, et par exemple au carter 61 selon la réalisation de la figure 4.

L'ensemble fixe du moyen de suspension comporte selon une première alternative un corps cylindrique 41 s'étendant en élévation qui est suspendu au système d'absorption d'énergie 20. Par exemple, le corps cylindrique est fixé au fourreau 37 par le biais d'une liaison mécanique 41'.

Le corps cylindrique est dit « fixe » dans la mesure où ce corps n'effectue pas de mouvement tant que le système d'absorption d'énergie n'est pas sollicité.

Le corps cylindrique 41 est traversé par la tige 42 de l'ensemble mobile. Dès lors, l'organe ressort 50 est agencé à l'intérieur du corps cylindrique 41. Plus précisément, l'organe ressort est interposé contre un appui 43 du corps cylindrique et un épaulement 42' de la tige 42.

Par ailleurs, la tige 42 peut comprendre une portion filetée 42", à l'aplomb de son épaulement 42' par exemple. Par suite et en référence à la figure 10, le système de suspension 40 peut inclure un écrou 44 agencé dans le corps cylindrique 41 et en prise sur la portion filetée 42".

Un moyen de roulement 44' peut être disposé entre l'écrou et le corps cylindrique 41. De plus, ce corps cylindrique peut comporter des moyens de blocage pour empêcher un déplacement en élévation de l'écrou le long de la tige 42. Par conséquent, l'écrou 44 possède uniquement un degré de liberté en rotation autour de l'axe de rotation AX.

Un déplacement du baquet induit alors un déplacement de la tige 42 selon la double flèche F3 générant une rotation ROT de l'écrou 44.

Par conséquent, le système d'inhibition 70 peut être un système fonctionnant par inertie.

Ce système d'inhibition 70 inclut ainsi un anneau 71 de blocage disposé dans le corps cylindrique 41 à l'aplomb de l'écrou 44. Cet anneau 71 possède des saillies radiales 71' coulissant dans des rainures 411 en élévation du corps cylindrique 41. Ainsi, l'anneau 71 possède uniquement une liberté de mouvement selon une direction en élévation. En effet, les saillies radiales représentent un moyen d'immobilisation qui immobilisent en rotation l'anneau 71 de blocage autour de l'axe de rotation AXROT de l'écrou 44.

De plus, l'anneau 71 de blocage comprend une surface interne S1 pourvue de premières cannelures 73 en élévation. De même, l'écrou 44 est muni d'une surface externe S2 aptes à être en vis-à-vis de la première surface S1, cette surface externe S2 étant pourvue de deuxièmes cannelures 74 en élévation.

Enfin, un ressort 72 est interposé entre un épaulement interne 200 du corps cylindrique 41 et l'anneau 71 de blocage. Ce ressort tend à éloigner l'anneau 71 de l'écrou 44. Par contre, durant un crash, ce ressort n'empêche plus l'anneau d'entourer l'écrou 44 en effectuant un mouvement translatif en élévation selon la flèche F4. Les premières cannelures 73 sont alors en prise avec les deuxièmes cannelures. L'écrou est alors immobilisé en rotation par l'anneau 71. Il en résulte une inhibition de l'organe ressort 50, l'ensemble mobile devenant solidaire de l'ensemble fixe du système de suspension.

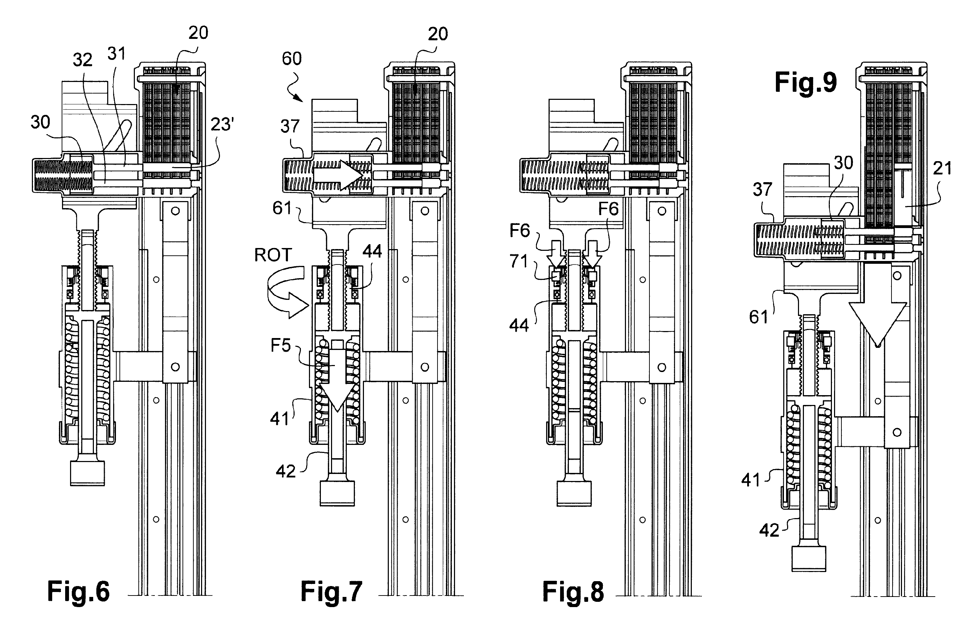

Les figures 6 à 9 explicitent le fonctionnement de la première variante d'un index, de la première version d'un moyen d'indexation et de la première alternative de réalisation d'un système de suspension

En référence à la figure 6 et en l'absence de passager, le siège est au repos. L'index 30 peut éventuellement n'être en prise avec aucun absorbeur.

En référence à la figure 7, lorsqu'un passager s'assoit sur le baquet, l'ensemble mobile effectue une translation en élévation vers le plancher. La tige 42 et le carter 61 solidaire du baquet se déplacent donc selon la flèche F5 en élévation. A l'inverse, le corps cylindrique 41 et le fourreau 37 demeurent immobiles en étant liés au système d'absorption d'énergie 20.

Sous l'impulsion de la tige 41, l'écrou 44 effectue un mouvement rotatif Rot tendant à amortir le mouvement du baquet.

De plus, l'index 30 se déplace en translation transversale en engageant un ou plusieurs absorbeurs sous l'impulsion du moyen d'indexation 60.

En référence à la figure 8, lors d'un crash, l'anneau 71 de blocage se déplace selon la flèche F6 et immobilise l'écrou 44. L'ensemble mobile devient solidaire de l'ensemble fixe.

En référence à la figure 9, le crash induit un déplacement du baquet 10. Le baquet exerce un effort sur la tige 42 et le carter 61. Cet effort est transmis au système d'absorption d'énergie 20 via le corps cylindrique 41, le fourreau 37 puis l'index 30. Suite à la rupture des organes fusibles, l'index 30 sollicite les absorbeurs 21 dans lesquels il est engagé.

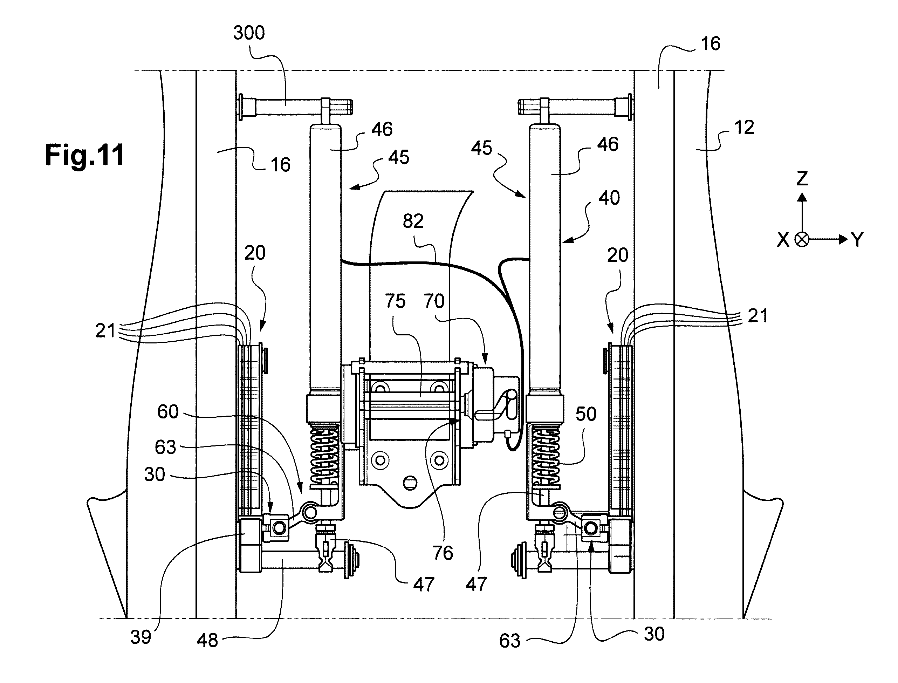

Les figures 11 à 16 présentent des vues explicitant une réalisation de l'invention combinant une deuxième variante d'un index, une deuxième version d'un moyen d'indexation et une deuxième alternative de réalisation d'un système de suspension.

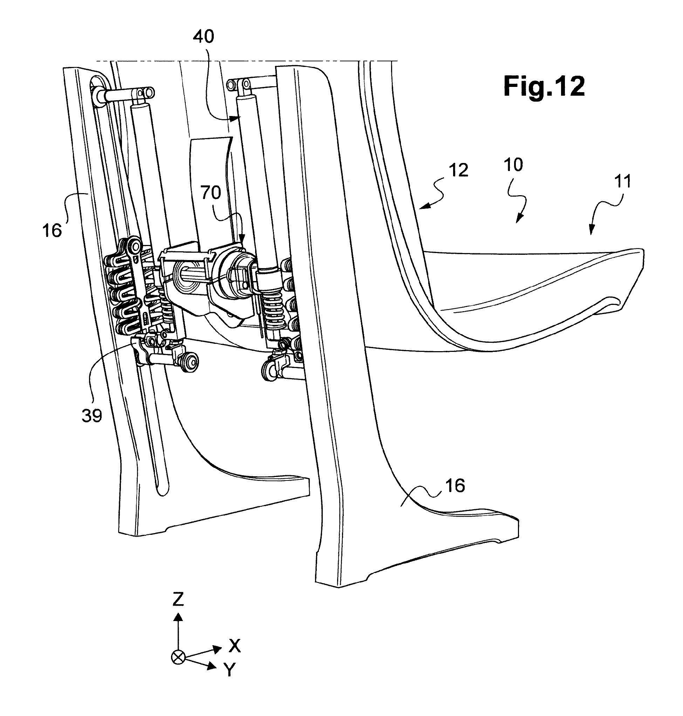

Plus précisément, la figure 12 présente une vue en trois dimensions, la figure 11 présentant un siège vu de derrière.

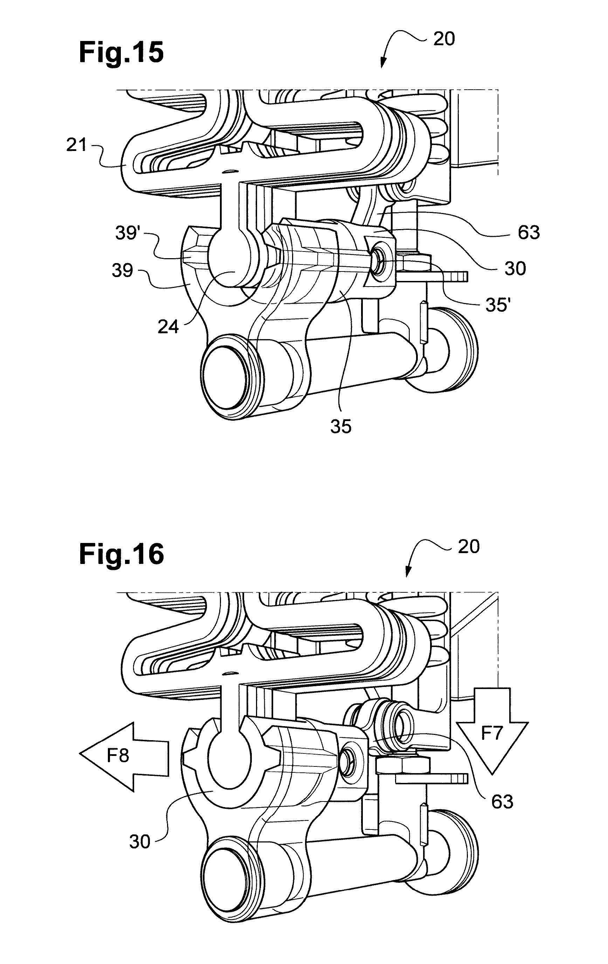

En référence à la figure 15, une deuxième variante d'un index comporte au moins un cylindre évidé 35. Le cylindre évidé a une section en forme de C pour pouvoir être traversé par la deuxième extrémité 24 des absorbeurs. Le cylindre évidé 35 peut coulisser transversalement pour entourer un ou plusieurs absorbeurs, voire un ou plusieurs organes fusibles.

En outre le siège comporte un moyen de guidage 39 de l'index. Le moyen de guidage 39 peut avoir une section en forme de C pour pouvoir être traversé par l'index. De plus le moyen de guidage peut posséder au moins une rainure transversale 39' coopérant avec une saillie transversale 35' de l'index.

Par ailleurs, le système de suspension comporte un ensemble dit « ensemble fixe » qui est relié au système d'absorption d'énergie, et un ensemble dit « ensemble mobile » qui est relié au baquet 10.

Le siège peut ainsi comprendre une deuxième version d'un moyen d'indexation 60. En référence à la figure 11, ce moyen d'indexation 60 comprend une bielle 63 solidaire du baquet 10. La bielle est articulée à l'ensemble mobile du système de suspension et à un index 30. Dès lors et en référence à la figure 16, une translation en élévation selon la flèche F7 de l'ensemble mobile induit une translation transversale de l'index selon la flèche F8.

En référence à la figure 11, l'ensemble mobile du système de suspension 40 comprend un corps mobile 46 d'un vérin 45. Ce corps mobile 46 est ainsi fixé au baquet par un axe 300. Il est à noter que cet axe 300 peut déboucher sur un rail de guidage d'un piètement.

L'ensemble fixe du moyen de suspension comporte alors selon une deuxième alternative un corps fixe 47 d'un vérin 45. Ce corps fixe est relié au système d'absorption d'énergie 20 par un renvoi 48 et le moyen de guidage 39.

Le corps fixe 47 peut être une tige de vérin s'étendant en élévation et pénétrant dans le corps mobile 46. Le vérin est alors un vérin à corps mobile.

Dès lors, l'organe ressort 50 est interposé entre le corps mobile 46 et le corps fixe 47 du vérin 45, en étant disposé entre le corps mobile 46 et un épaulement du corps fixe par exemple.

Le vérin est avantageusement un vérin pouvant être inhibé par la manoeuvre d'un contacteur de commande.

Dès lors, le système d'inhibition 70 inclut par exemple un enrouleur 75 de harnais et d'un câble 82 de commande du vérin 45.

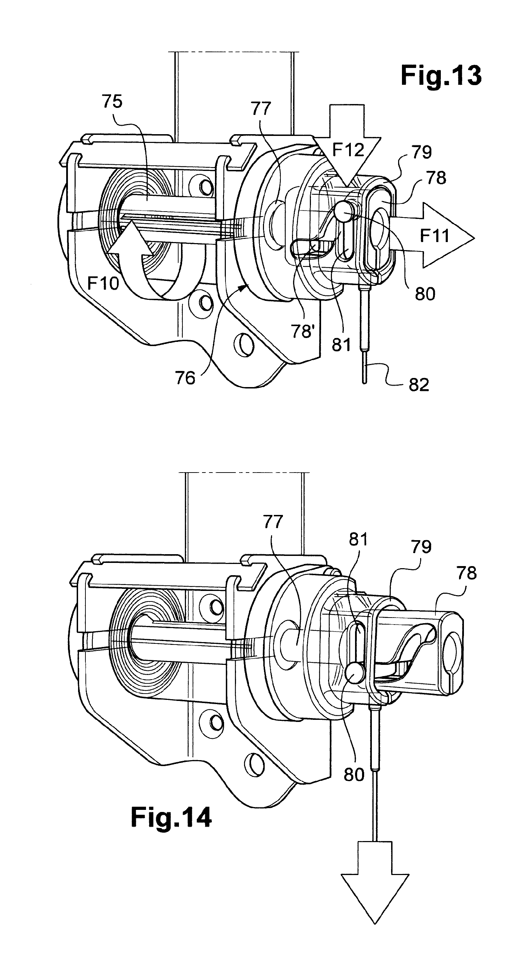

En référence à la figure 13, une came 76 est interposée entre l'enrouleur 75 et le câble 82. Cette came 76 peut inclure un axe fileté 77 en prise avec un guide 78 bloqué en rotation par un organe de blocage 79 immobile. Par ailleurs, l'organe de blocage 79 inclut une lumière 81 en élévation dans laquelle coulisse un actionneur 80 relié au câble 82. Cet actionneur 80 traverse de plus une fente de guidage 78' du guide 78.

Par suite, une rotation de l'enrouleur selon la flèche F10 induit une translation du guide 78. En référence à la figure 14, le guide induit alors une translation de l'actionneur 80 dans la lumière 81.

Par suite, en l'absence de passager, le siège est au repos. L'index 30 peut éventuellement n'être en prise avec aucun absorbeur.

En référence à la figure 11, lorsqu'un passager s'assoit sur le baquet, chaque corps mobile 46 effectue une translation en élévation en sollicitant l'organe ressort 50. Chaque corps mobile déplace alors un index 30 pour engager automatiquement et mécaniquement le nombre requis d'absorbeurs.

Le passager sollicite alors l'enrouleur 75 pour mettre un harnais. Cette action bloque chaque vérin 45.

Lors d'un crash, le baquet 10 se déplace. Le baquet exerce un effort sur chaque vérin 45. Cet effort est transmis à chaque système d'absorption d'énergie 20 via un corps mobile 46, un corps fixe 47, un renvoi 48, un moyen de guidage 39 et un index 30.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Il est ainsi possible de combiner les variantes, versions et alternatives présentés de manière différentes pour obtenir un autre type de siège. Par exemple, il est possible d'agencer le moyen d'indexation de la figure 4 sur le siège de la figure 11.

## Revendications

1. Siège (5) d'un aéronef (1) comprenant un baquet (10) et un châssis (15) fixable à un plancher (2) pour porter ledit baquet (10), ledit siège (5) comprenant au moins un système d'absorption d'énergie (20),
- chaque système d'absorption d'énergie (20) étant muni d'une pluralité d'absorbeurs (21) d'énergie agencés en parallèle, chaque absorbeur (21) d'énergie ayant une première extrémité (22) solidarisée audit châssis (15),
**caractérisé en ce que**
- ledit siège (5) comporte un index (30) mobile en translation pour solidariser le baquet (10) à au moins un desdits systèmes d'absorption d'énergie (20) en engageant une deuxième extrémité (23) d'un ou plusieurs absorbeurs (21) d'énergie de ce système d'absorption d'énergie (20),
- ledit siège (5) comporte au moins un système de suspension (40) ayant un organe ressort (50) suspendant ledit baquet (10) audit châssis (15) en fonction de la masse du passager, au moins un desdits systèmes de suspension (40) comportant un moyen d'indexation (60) mécanique coopérant avec ledit index (30) pour qu'une translation en élévation du système de suspension (40) par rapport au châssis (15) sous l'action de la masse du passager assis sur ledit baquet (10) induise automatiquement une translation transversale de l'index (30) afin d'engager le nombre d'absorbeurs (21) d'énergie correspondant à la masse du passager, ledit siège (5) comportant un système d'inhibition (70) mécanique pour bloquer le système de suspension (40) lors d'un crash.

2. Siège selon la revendication 1,
**caractérisé en ce qu'**au moins un système d'absorption d'énergie (20) comprend au moins un organe fusible (24) solidaire dudit châssis (15) et pouvant être solidarisé audit index (30).

3. Siège selon l'une quelconque des revendications 1 à 2,
**caractérisé en ce que** ledit index (30) comporte au moins un cylindre (31, 32) pénétrant dans un orifice (23') des absorbeurs (21).

4. Siège selon l'une quelconque des revendications 1 à 2,
**caractérisé en ce que** ledit index (30) comporte un cylindre évidé (35) qui coulisse autour d'une extrémité (23) desdits absorbeurs (21).

5. Siège selon l'une quelconque des revendications 1 à 4,
**caractérisé en ce que** ledit siège (5) comporte un moyen de guidage (39) en translation d'au moins un index (30).

6. Siège selon l'une quelconque des revendications 1 à 5,
**caractérisé en ce que** ledit siège (5) comporte un fourreau (37) dans lequel coulisse une tête de l'index (30), au moins un ressort (36) étant interposé entre ladite tête (33) et ledit fourreau (37).

7. Siège selon l'une quelconque des revendications 1 à 6,
**caractérisé en ce que** ledit index (30) comprend un premier doigt (31) coopérant avec les absorbeurs (21) d'un système d'absorption d'énergie (20) et un deuxième doigt (32) coopérant avec un organe fusible (24) du système d'absorption d'énergie (20).

8. Siège selon l'une quelconque des revendications 1 à 7, **caractérisé en ce que** ledit moyen d'indexation (60) comporte un carter (61) creux muni d'une lumière (62) présentant une pente inclinée, ledit index (30) ayant un ergot (34) coulissant dans ladite lumière afin qu'une translation en élévation du système de suspension (40) induise le glissement dudit ergot (34) dans ladite lumière (62) provoquant la translation transversale de l'index (30).

9. Siège selon l'une quelconque des revendications 1 à 7,
**caractérisé en ce que** ledit moyen d'indexation (60) comporte une bielle (63) articulée audit index (30) et à un corps mobile du système de suspension (40).

10. Siège selon l'une quelconque des revendications 1 à 9,
**caractérisé en ce que** ledit système de suspension (40) comporte un vérin (45) muni d'un corps mobile (46) et d'un corps fixe (47), ledit corps mobile (46) étant solidarisé au baquet (10) et ledit corps fixe (47) étant attaché au système d'absorption d'énergie (20), ledit organe ressort (50) est interposé entre le corps mobile (46) et le corps fixe (47).

11. Siège selon l'une quelconque des revendications 1 à 9,
**caractérisé en ce que** ledit système de suspension (40) comporte un corps cylindrique (41) attaché au système d'absorption d'énergie (20) ainsi qu'une tige (42) solidaire du baquet (10) saillant dudit corps cylindrique (41) et un organe ressort (50), ledit organe ressort (50) étant interposé entre un appui (43) dudit corps cylindrique (41) et un épaulement (42') de ladite tige (42).

12. Siège selon la revendication 11,
**caractérisé en ce que** ladite tige (42) comprenant une portion filetée (42"), ledit système de suspension (40) inclut un écrou (44) agencé dans ledit corps cylindrique (41) et en prise sur ladite portion filetée (42").

13. Siège selon la revendication 10,
**caractérisé en ce qu'**un système d'inhibition (70) est muni d'un enrouleur (75) de harnais et d'un câble (82) de commande du vérin (45), une came (76) étant interposée entre ledit enrouleur (75) et ledit câble (82) pour qu'une rotation de l'enrouleur (75) induise une translation du câble (82) inhibant le vérin (45).

14. Siège selon la revendication 12,
**caractérisé en ce qu'**un système d'inhibition (70) est muni d'un anneau (71) de blocage disposé dans ledit corps cylindrique (41) à l'aplomb dudit écrou (44), ledit corps cylindrique (41) comportant un moyen d'immobilisation pour immobiliser en rotation l'anneau (71) de blocage autour d'un axe de rotation (AXROT) de l'écrou (44), ledit anneau (71) de blocage comportant une surface interne (S1) pourvue de premières cannelures (73) en élévation et ledit écrou (44) comportant une surface externe (S2) pourvue de deuxièmes cannelures (74) en élévation, un ressort (72) étant interposé entre un épaulement interne dudit corps cylindrique (41) et ledit anneau (71) de blocage pour désolidariser les premières cannelures (73) des deuxièmes cannelures (74) hors conditions de crash et permettre l'engagement des premières cannelures (73) avec les deuxièmes cannelures (74) durant un crash.

15. Siège selon l'une quelconque des revendications 1 à 14,
**caractérisé en ce que** le châssis (15) comporte un premier et un deuxième piètements (16), un système d'absorption d'énergie (20) par piètement (16), un index (30) mobile par piètement (16), un système de suspension (40) par piètement (16).

16. Aéronef (1),
**caractérisé en ce que** cet aéronef (1) est muni d'un siège (5) selon l'une quelconque des revendications 1 à 15.

## Patentansprüche

1. Sitz (5) eines Luftfahrzeugs (1) mit einer Sitzschale (10) und einem Rahmen (15), der an einem Boden (2) zum Tragen der Sitzschale (10) befestigbar ist, wobei der Sitz (5) mindestens ein Energie-absorptionssystem (20) aufweist, wobei
- jedes Energieabsorptionssystem (20) mit einer Mehrzahl von Energieabsorbern (21) versehen ist, die parallel zueinander angeordnet sind, wobei jeder Energieabsorber (21) ein erstes Ende (22) aufweist, das am Rahmen (15) befestigt ist,
**dadurch gekennzeichnet, dass**
- der Sitz (5) einen translatorisch beweglichen Index (30) aufweist, um die Sitzschale (10) mit mindestens einem der Energieabsorptionssysteme (20) durch Einbringen eines zweiten Endes (23) eines oder mehrerer Energieabsorber (21) dieses Energieabsorptionssystems (20) fest zu verbinden,
- der Sitz (5) mindestens ein Aufhängungssystem (40) aufweist, mit einem Federelement (50), über das die Sitzschale (10) am Rahmen (15) in Abhängigkeit von dem Gewicht des Passagiers aufgehängt ist, wobei mindestens eines der Aufhängungssysteme (40), das ein mechanisches Indizierungsmittel (60) aufweist, das mit dem Index (30) für eine Translationsbewegung des Aufhängungssystems (40) nach oben relativ zu dem Rahmen (15) unter der Einwirkung des Gewichts des Passagiers, der auf der Sitzschale (10) sitzt, zusammenwirkt, automatisch eine quer verlaufende Translationsbewegung des Indexes (30) induziert, um die Anzahl der Energieabsorber (21) einzubringen, die dem Gewicht des Passagiers entspricht, wobei der Sitz (5) ein mechanisches Sperrsystem (70) aufweist, um während eines Crashs das Aufhängungssystem (40) zu blockieren.

2. Sitz nach Anspruch 1,
**dadurch gekennzeichnet, dass** mindestens ein Energieabsorptionssystem (20) mindestens ein schmelzbares Element (24) aufweist, das mit dem Rahmen (15) fest verbunden ist und mit dem Index (30) verbindbar ist.

3. Sitz nach einem der Ansprüche 1 bis 2,
**dadurch gekennzeichnet, dass** der Index (30) mindestens einen Zylinder (31, 32) aufweist, der in eine Öffnung (23') der Absorber (21) eindringt.

4. Sitz nach einem der Ansprüche 1 bis 2,
**dadurch gekennzeichnet, dass** der Index (30) einen Hohlzylinder (35) aufweist, der um ein Ende (23) der Absorber (21) herum gleitet.

5. Sitz nach einem der Ansprüche 1 bis 4,
**dadurch gekennzeichnet, dass** der Sitz (5) ein in Translationsrichtung wirkendes Führungsmittel (39) mindestens eines Indexes (30) aufweist.

6. Sitz nach einem der Ansprüche 1 bis 5,
**dadurch gekennzeichnet, dass** der Sitz (5) eine Buchse (37) aufweist, in der ein Kopf eines Indexes (30) geleitet, wobei mindestens eine Feder (36) zwischen dem Kopf (33) und der Buchse (37) angeordnet ist.

7. Sitz nach einem der Ansprüche 1 bis 6,
**dadurch gekennzeichnet, dass** der Index (30) einen ersten Finger (31) aufweist, der mit den Absorbern (21) eines Energieabsorptionssystems (20) zusammenwirkt, und einen zweiten Finger (32), der mit einem schmelzbaren Element (24) des Energieabsorptionssystems (20) zusammenwirkt.

8. Sitz nach einem der Ansprüche 1 bis 7,
**dadurch gekennzeichnet, dass** das Indizierungsmittel (60) ein hohles Gehäuse (61) aufweist, das mit einer Öffnung (62) versehen ist, die eine geneigte Schräge aufweist, wobei der Index (30) einen Stift (34) aufweist, der in der Öffnung gleitet, damit eine Translationsbewegung des Aufhängungssystems (40) nach oben ein Gleiten des Stiftes (34) in der Öffnung (62) bewirkt, was eine Translationsbewegung in Querrichtung des Indexes (30) bewirkt.

9. Sitz nach einem der Ansprüche 1 bis 7,
**dadurch gekennzeichnet, dass** das Indizierungsmittel (60) eine an dem Index (30) und an einem beweglichen Körper des Aufhängungssystems (40) angelenkte Steuerstange aufweist.

10. Sitz nach einem der Ansprüche 1 bis 9,
**dadurch gekennzeichnet, dass** das Aufhängungssystem (40) eine Kolben-Zylinder-Einheit (45) aufweist, die mit einem beweglichen Körper (46) und einem unbeweglichen Körper (47) versehen ist, wobei der bewegliche Körper (46) mit der Sitzschale (10) fest verbunden ist, und der unbewegliche Körper (47) mit dem Energieabsorptionssystem (20) verbunden ist, wobei das Federorgan (50) zwischen dem beweglichen Körper (46) und dem unbeweglichen Körper (47) angeordnet ist.

11. Sitz nach einem der Ansprüche 1 bis 9,
**dadurch gekennzeichnet, dass** das Aufhängungssystem (40) einen Zylinderkörper (41) aufweist, der an dem Energieabsorptionssystem (20) sowie an einer Stange (42) befestigt ist, die mit der Sitzschale (10), die über den Zylinderkörper (41) vorsteht, fest verbunden ist, und ein Federorgan (50), wobei das Federorgan (50) zwischen einer Auflage (43) des Zylinderkörpers (41) und einer Schulter (42') der Stange (42) angeordnet ist.

12. Sitz nach Anspruch 11,
**dadurch gekennzeichnet, dass** die Stange (42) einen Gewindeabschnitt (42") aufweist, wobei das Aufhängungssystem (40) eine Schraubenmutter (44) aufweist, die in dem Zylinderkörper (41) angeordnet ist und in Eingriff mit dem Gewindeabschnitt (42") steht.

13. Sitz nach Anspruch 10,
**dadurch gekennzeichnet, dass** ein Sperrsystem (70) mit einer Aufrollvorrichtung (75) für Kabelbäume und einem Steuerungskabel (82) der Kolben-Zylinder-Einheit (45) versehen ist, wobei eine Nocke (76) zwischen der Aufrollvorrichtung (75) und dem Kabel (82) angeordnet ist, damit eine Drehung der Aufrollvorrichtung (75) eine Translationsbewegung des Kabels (82) bewirkt, die die Kolben-Zylinder-Einheit (45) sperrt.

14. Sitz nach Anspruch 12,
**dadurch gekennzeichnet, dass** das Sperrsystem (70) mit einem Blockierring (71) versehen ist, der in dem Zylinderkörper (41) im Lot mit der Schraubenmutter (44) angeordnet ist, wobei der Zylinderkörper (41) ein Blockiermittel aufweist, um eine Drehbewegung des Blockierrings (71) um eine Drehachse (AXROT) der Schraubenmutter (44) zu blockieren, wobei der Blockierring (71) eine Innenseite (S1) aufweist, die mit nach oben verlaufenden ersten Rillen (73) versehen ist, und wobei die Schraubenmutter (44) eine Außenfläche (S2) aufweist, die mit zweiten nach oben gerichteten Rillen (74) versehen ist, wobei eine Feder (72) zwischen einer Innenschulter des Zylinderkörpers (41) und dem Blockierring (71) angeordnet ist, um die ersten Rillen (73) von den zweiten Rillen (74) unter Crashbedingungen zu lösen und das Eingreifen der ersten Rillen (73) in die zweiten Rillen (74) während eines Crashs zu ermöglichen.

15. Sitz nach einem der Ansprüche 1 bis 14,
**dadurch gekennzeichnet, dass** der Rahmen (15) einen ersten und
einen zweiten Fuß (16), ein Energieabsorptionssystem (20) pro Fluß (16), einen beweglichen Index (30) pro Fuß (16) und ein Aufhängungssystem (40) pro Fluß (16) aufweist.

16. Luftfahrzeug (1),
**dadurch gekennzeichnet, dass** das Luftfahrzeug (1) mit einem Sitz (5) nach einem der Ansprüche 1 bis 15 ausgerüstet ist.

## Claims

1. Seat (5) of an aircraft (1) comprising a bucket (10) and a frame (15) fixable to a floor (2) for carrying said bucket (10), said seat (5) comprising at least one energy absorption system (20),
- each energy absorption system (20) being provided with a plurality of energy absorbers (21) arranged in parallel, each energy absorber (21) having a first end (22) secured to said frame (15),
**characterised in that**
- said seat (5) comprises an index (30) movable in translation to secure the bucket (10) to at least one of said energy absorption systems (20) by engaging a second end (23) of one or more energy absorbers (21) of the energy absorption system (20),
- said seat (5) comprises at least one suspension system (40) having a spring member (50) suspending said bucket (10) from said frame (15) as a function of the mass of the passenger, at least one of said suspension systems (40) comprising a mechanical indexing means (60) cooperating with said index (30) so that a translation in elevation of the suspension system (40) relative to the frame (15) under the action of the mass of the passenger sitting on said bucket (10) automatically causes a transverse translation of the index (30) in order to engage the number of energy absorbers (21) corresponding to the mass of the passenger, said seat (5) comprising a mechanical inhibition system (70) for blocking the suspension system (40) during a crash.

2. Seat according to claim 1,
**characterised in that** at least one energy absorption system (20) comprises at least one fusible member (24) secured tc said frame (15) and capable of being secured to said index (30).

3. Seat according to any one of claims 1 to 2,
**characterised in that** said index (30) comprises at least one cylinder (31, 32) penetrating into an orifice (23') of the absorbers (21).

4. Seat according to any one of claims 1 to 2,
**characterised in that** said index (30) comprises a hollow cylinder (35) which slides around an end (23) of said absorbers (21).

5. Seat according to any one of claims 1 to 4,
**characterised in that** said seat (5) comprises a guide means (39) for guiding at least one index (30) in translation.

6. Seat according to any one of claims 1 to 5,
**characterised in that** said seat (5) comprises a sheath (37) in which a head of the index (30) slides, at least one spring (36) being interposed between said head (33) and said sheath (37).

7. Seat according to any one of claims 1 to 6,
**characterised in that** said index (30) comprises a first finger (31) cooperating with the absorbers (21) of an energy absorption system (20) and a second finger (32) cooperating with a fusible member (24) of the energy absorption system (20).

8. Seat according to any one of claims 1 to 7,
**characterised in that** said indexing means (60) comprises a hollow casing (61) provided with a slot (62) having an inclined slope, said index (30) having a stud (34) sliding in said slot so that a translation in elevation of the suspension system (40) causes said stud (34) to slide in said slot (62), causing the transverse translation of the index (30).

9. Seat according to any one of claims 1 to 7,
**characterised in that** said indexing means (60) comprises a link (63) articulated to said index (30) and to a movable body of the suspension system (40).

10. Seat according to any one of claims 1 to 9,
**characterised in that** said suspension system (40) comprises an actuator (45) provided with a movable body (46) and a stationary body (47), said movable body (46) being secured to the bucket (10) and said stationary body (47) being attached to the energy absorption system (20), said spring member (50) is interposed between the movable body (46) and the stationary body (47).

11. Seat according to any one of claims 1 to 9,
**characterised in that** said suspension system (40) comprises a cylindrical body (41) attached to the energy absorption system (20) and a rod (42) secured to the bucket (10) projecting from said cylindrical body (41), and a spring member (50), said spring member (50) being interposed between a stop (43) of said cylindrical body (41) and a shoulder (42') of said rod (42).

12. Seat according to claim 11,
**characterised in that** said rod (42) comprising a threaded portion (42"), said suspension system (40) includes a nut (44) arranged in said cylindrical body (41) and engaged on said threaded portion (42").

13. Seat according to claim 10,
**characterised in that** an inhibition system (70) is provided with a harness winder (75) and a control cable (82) for controlling the actuator (45), a cam (76) being interposed between said winder (75) and said cable (82) so that a rotation of the winder (75) causes a translation of the cable (82) inhibiting the actuator (45).

14. Seat according to claim 12,
**characterised in that** an inhibition system (70) is provided with a blocking ring (71) arranged in said cylindrical body (41) vertically in line with said nut (44), said cylindrical body (41) comprising an immobilising means for immobilising the blocking ring (71) in rotation about an axis of rotation (AXROT) of the nut (44), said blocking ring (71) comprising an inside surface (S1) provided with first splines (73) in elevation and said nut (44) comprising an outside surface (S2) provided with second splines (74) in elevation, a spring (72) being interposed between an internal shoulder of said cylindrical body (41) and said blocking ring (71) for separating the first splines (73) from the second splines (74) except during crash conditions and for allowing the first splines (73) to engage with the second splines (74) during a crash.

15. Seat according to any one of claims 1 to 14,
**characterised in that** the frame (15) comprises a first and a second leg (16), one energy absorption system (20) per leg (16), one movable index (30) per leg (16), one suspension system (40) per leg (16).

16. Aircraft (1),
**characterised in that** the aircraft (1) is provided with a seat (5) according to any one of claims 1 to 15.
